# EUROPEAN PATENT SPECIFICATION

(11) **EP 1 627 834 B1**
(45) Date of publication and mention of the grant of the patent: **10.10.2007**
(21) Application number: 05017328.5
(22) Date of filing: 09.08.2005
(51) Int. Cl.: B65G 47/51

(54) **Carrying system**
Tragvorrichtung
Système de portage

(30) Priority: 16.08.2004 JP 2004236547
(43) Date of publication of application: 22.02.2006
(73) Proprietor: MURATA KIKAI KABUSHIKI KAISHA, Minami-ku Kyoto-shi Kyoto 601 (JP)
(72) Inventor: Fujiki, Hiroshi, Fuso-cho Niwa-gun Aichi (JP)
(74) Representative: Liedl, Christine

(56) References cited:
- WO-A-20/04034438
- US-A- 5 980 183
- US-A1- 2004 149 672
- US-B1- 6 183 184

## Description

### Field of the Invention

The present invention relates to a carrying system using an overhead running carriage, a rail guided carriage running on the ground, or an automated guided carriage.

### Description of the Related Art

In a carrying system, a carriage controller may receive two conveyance massages: conveyance of an article from a load port of a processing device and conveyance of an article to the load port of the processing device. This occurs when, for example, the processing device finishes processing an article. That is, this article is to be carried out of the processing device, which also requests that the next article to be carried into the device. In the prior art, in this case, a first carriage is instructed to convey the article from the load port. Then after the completion of the conveyance is confirmed, a second carriage is instructed to convey a new article to the load port. In this manner, the conveyance order is strictly observed. This is because when the second carriage reaches the load port earlier, at which an article is already present, it must wait until the article is removed from the load port, by for example, circulating through a route. This significantly degrades conveyance efficiency. Of course, in this case, with the two conveyance instructions involving the common load port, the instruction on conveyance of an article to the load port cannot be started until the controller has confirmed that the article already present at the load port has been carried out of the load port. This delays the conveyance. The Japanese Patent Number 3067656 discloses the provision of a buffer shelf below a running rail for an overhead running carriage.

Another carrying system with carriages and storage units is described in WO 2004/034438 A2.

### Summary of the Invention

It is an object of the present invention to allow a carriage controller to easily assign conveyance instructions.

It is an additional object of an aspect of the invention set forth in Claim 2 to complete a conveyance instruction by transferring an article temporarily placed by a first carriage, to a load port.

It is an additional object of an aspect of the invention set forth in Claim 3 to facilitate transfers between a buffer shelf and the carriage.

It is an additional object of an aspect of the invention set forth in Claim 4 to use a simple shelf comprising no conveyors or the like so that articles can be easily transferred between the shelf and a load port or another shelf.

The present invention provides a carrying system comprising a carriage that runs on a route along processing devices with load ports to convey articles and a carriage controller that indicates a destination of an article to the carriage, a buffer shelf is provided near each of the load ports, the carrying system being arranged so that when the carriage which has been instructed to carry an article into a predetermined load port reaches this load port, if another article has already been present at the load port, the carriage unloads the carried-into article onto the buffer shelf, the carrying system being characterized in that is further arranged so 3 that the carriage then carries the other article out of the load port.

If a plurality of buffer shelves are provided, not all the load ports need to be provided with the shelves. The present invention has only to be applied to load ports having buffer shelves nearby. Moreover, if a plurality of articles can be temporarily placed on the buffer shelf, the operation described below is possible. The carriage temporarily places on the shelf not only the carried-into article but also the article already present at the load port. Then, the carriage transfers the temporarily placed carried-into article to the load port. Subsequently, the carriage conveys the temporarily placed article to be carried out of the load port.

Preferably, the carriage is a first carriage, and when a second carriage which has been instructed by the carriage controller to carry the article out of the load port reaches the load port later than the first carriage, the second carriage carries the article unloaded onto the buffer shelf by the first carriage, into the load port.

Preferably, the load port and the buffer shelf are at the same position along a running direction of the carriage so that the carriage can be stopped at a position where the carriage can transfer the article either to the load port or to the buffer shelf.

Preferably, the buffer shelf is provided on either a right or left side of the route, and the carriage is provided with a transfer device that can transfer the article in a vertical direction and means for moving the transfer device rightward or leftward in the running direction. The carriage has only to move at least either rightward or leftward in the running direction and does not need to move both rightward and leftward in this direction.

According to the present invention, if an article is already present at the destination load port, the carriage temporarily places the carried-into article on the surrounding buffer shelf. The carriage then carries the article out of the load port. Thus, the running of the carriage to the load port is not useless and the same carriage can also carry the article out of the load port. This improves conveyance efficiency. The carriage controller can assign conveyance instructions without the need to strictly manage the state of the load port. This facilitates the assignment of conveyance instructions.

The aspect of the present invention set forth in Claim 2 is intended for the carriage that has been requested to carry the article out of the load port. When the carriage reaches the neighborhood of the load port, it transfers the article temporarily placed on the buffer shelf, to the load port. This makes it possible to complete two instructions: the instruction on the conveyance of the article from the load port and the instruction on the conveyance of the article to the load port.

According to the aspect of the present invention set forth in Claim 3, the buffer shelf and the load port are arranged at the same position in the running direction of the carriage. As a result, at the same position, the carriage can transfer the article to and from both the load port and the shelf. This makes it possible to easily control the stoppage of the carriage at the buffer shelf. Further, the transfer between the shelf and the load port can be facilitated.

According to the aspect of the present invention set forth in Claim 4, the buffer shelf is provided on at least either the right or left side of the route, and the carriage is provided with the transfer device that can transfer the article in the vertical direction and means for moving the transfer device rightward or leftward in the running direction. This enables articles to be easily transferred between the buffer shelf and the carriage. The buffer shelf need not be provided with any facilities such as a conveyor.

### Brief Description of the Drawings

Figure 1 is a plan view schematically showing the layout of a carrying system according to an embodiment.
Figure 2 is a front view of an essential part of the carrying system showing the positional relationship between an overhead running carriage and both a load port and a buffer which are used in the embodiment.
Figure 3 is a block diagram showing a control system according to the embodiment.
Figure 4 is a block diagram showing the configuration of a carriage controller according to the embodiment.
Figure 5 is a flowchart showing a control algorithm for the carriage according to the embodiment.

### Detailed Description of the Preferred Embodiments

A description will be given below of an optimum embodiment for carrying out the present invention.

### [Embodiment]

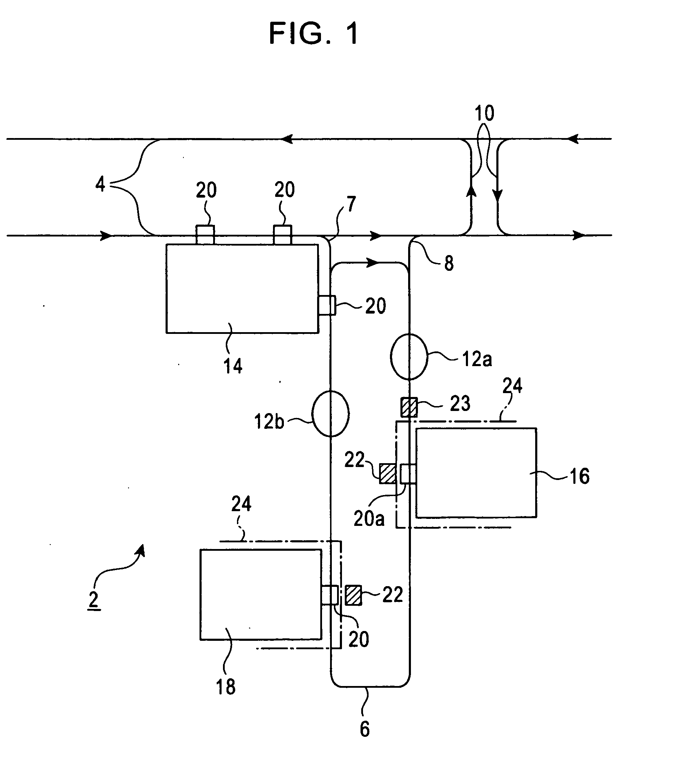

Figures 1 to 5 show a carrying system 2 according to the embodiment.

In the embodiment, the overhead running carriage 12 will be described as an example. However, it is possible to use a rail guided carriage, an automated guided carriage, or the like.

As shown in Figure 1, a route for the overhead running carriage 12 is divided into an inter-bay route 4 and an intra-bay route 6. The inter-bay route 4 is a main line for long-distance conveyance. The intra-bay route 6 is a looped route for each process which is installed for a large number of processing devices 16, 18. 7 is a branching portion, 8 is a joining portion, and 10 is a shortcut. In the carrying system 2, a large number of overhead running carriages run. However, the description below will focus on two overhead running carriages: an overhead running carriage 12a that has been instructed to convey an article from a load port 20a of the processing device 16 and an overhead running carriage 12b that has been instructed to convey an article to the load port 20a.

14 is a stocker placed, for example, at the boundary between the inter-bay route 4 and the intra-bay route 6. 16, 18 are examples of a plurality of processing devices. 22 is a buffer shelf to and from which articles can be transferred at the same position. In addition, a buffer shelf 23 may be used which is provided below a running rail for the intra-bay route 6. The chain line in Figure I indicates the range of management by a manufacturing controller that controls the processing devices 16, 18 and the like. The remaining part is managed by a distribution controller. Conveyed articles include semiconductor substrates and liquid crystal substrates. The processing devices 16, 18 may include not only devices that machine articles but also inspecting devices.

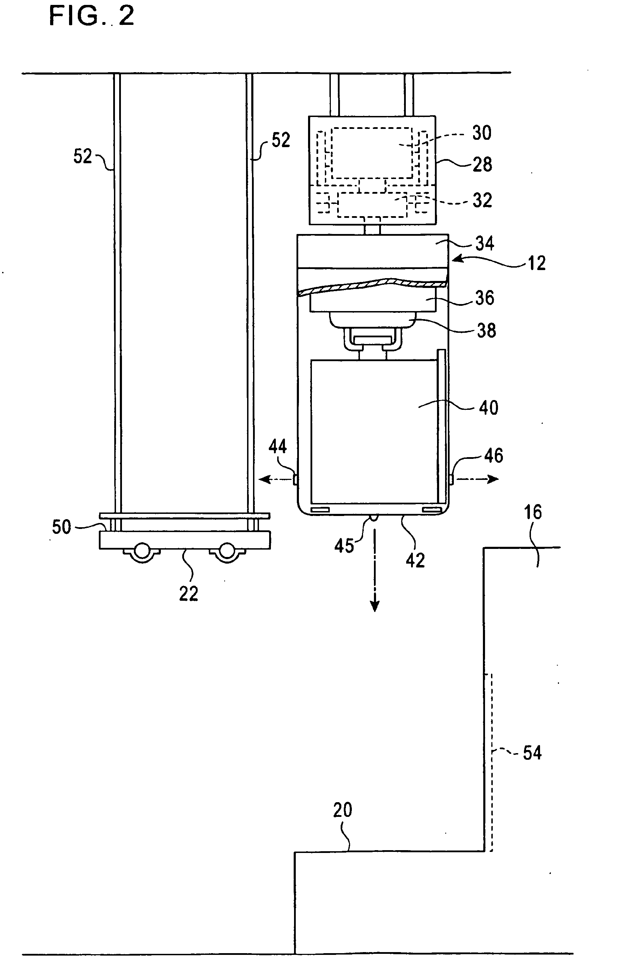

Figure 2 shows the configuration of the overhead running carriage 12 and the buffer shelf 22.

28 is a running rail supported by, for example, a ceiling of a clean room. The overhead running carriage 12 comprises a running driving section 30 and runs along a running rail 28. The overhead running carriage 12 also uses an electricity feeding section 32 to receive electricity from the running rail 28 in a non-contact manner and to communicate with the carriage controller and the like. If the autonomic control of the overhead running carriage 12 is important, the communication between the overhead running carriage and the carruage controller may be picked up by another overhead running carriage, which then stores information as to which conveyance instructions are assigned to which overhead running carriages.

34 is a lateral moving section that moves an elevation driving section 36, a platform 38, and a cassette 40 supported by the platform 38, in a lateral direction of the running rail 28. This movement has only to take place in at least one of the rightward and leftward directions. In the embodiment, the lateral moving section 34 can move laterally, for example, toward a side of the running rail 28 which is opposite the processing device 16. The elevation driving section 36 elevates and lowers the platform 38 by feeding and winding a belt, wire rope, or the like. Further, a cassette 40 to be conveyed accommodates semiconductor substrates or liquid crystal substrates.

42 is a protect cover that prevents the cassette 40 from falling during running. 44 to 46 are load sensors. The load sensor 44 detects whether or not any article is present on the buffer shelf 22. The load sensor 45 detects whether or not any article is present on the load port 20. The load sensor 46 is used when the buffer shelf is provided on the side of the running rail 28 which is closer to the processing device 16. Furthermore, the overhead running carriage 12 is provided with a communication section that communicates with the load port 20. Without the communication section, the overhead running carriage 12 communicates with the load port via the carriage controller.

50 is an article placement surface of the buffer shelf 22 on which an article is placed, and this article placement surface 50 is located slightly below the bottom surface of the cassette 40, for example, about 1 to 30 cm below the bottom surface. The buffer shelf 22 is hung from the ceiling using pillars 52. The buffer shelf 22 is not provided with any conveyor or sensor such as a load sensor. However, the buffer shelf 22 may be provided with a conveyor and a sensor. Further, the buffer shelves 22 and the load ports 20 may be provided on a one-to-one correspondence or one long buffer shelf can be provided for a plurality of load ports 20; the long buffer shelf can accommodate a plurality of articles. Furthermore, the buffer shelf 22 is provided on at least either the right or left side of the route but may be provided on both sides of the route. 54 in the processing device 15 is a door between the load port 20 and the interior of the processing device 16. Moreover, the load port 20 is provided with a conveyor (not shown in the drawings) so that an article can be moved between the load port 20 and the interior of the processing device 16 via the door 54.

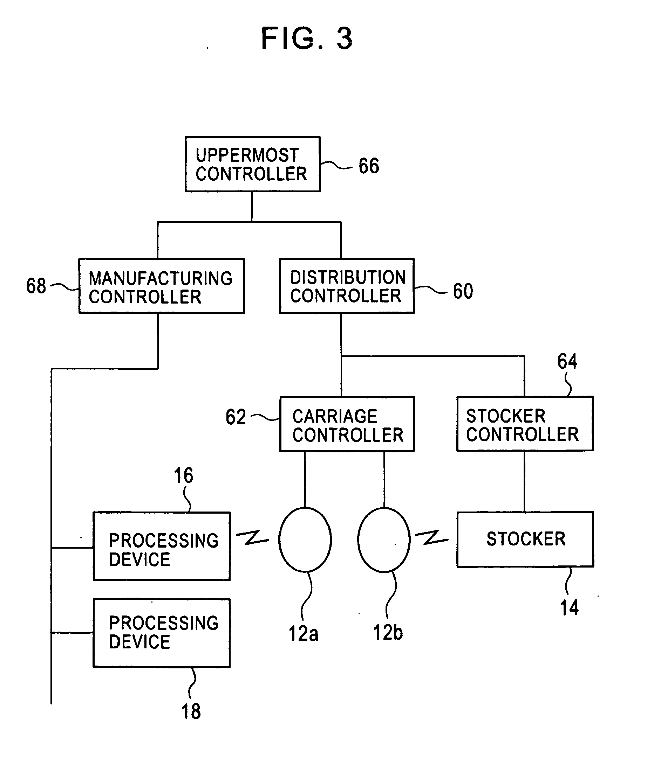

Figure 3 shows a control system for the carrying system 2. 60 is a distribution controller that manages a carriage controller 62 and a stocker controller 64. The distribution controller 60 receives a conveyance request from the manufacturing controller 68 via the uppermost controller 66. The distribution controller 60 notifies the manufacturing controller 68 of the result of conveyance via the uppermost controller 62. The stocker controller 64 controls the stoker 14. The carriage controller 62 manages the buffer shelves 22, 23.

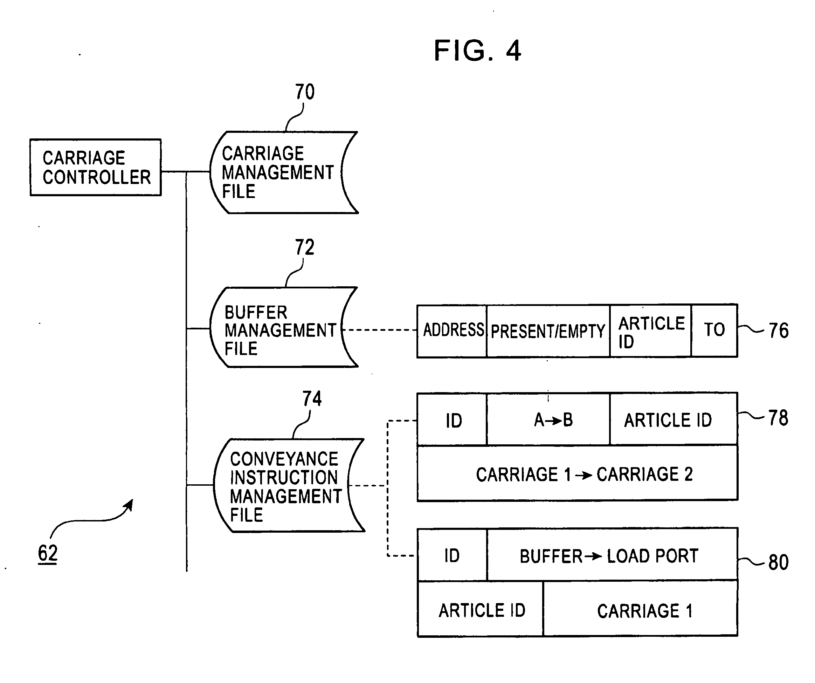

Figure 4 shows the configuration of the carriage controller 62. A carriage management file 70 manages the state of the overhead running carriage and stores, for example, a conveyance instruction assigned state, a standby state, an error state, or the like. A buffer management file 72 manages the states of the buffer shelves 22, 23 and stores records 76 on each buffer shelf such as addresses on the buffer shelf, whether or not any article is present on the buffer shelf, the ID of an article if any, and destination data (TO data). A conveyance instruction management file 74 stores conveyance instructions from the distribution controller 60 and statuses indicating how the instructions are being executed. If conveyance instructions have their contents changed while being executed as in the case of the embodiment, the conveyance instructions 78, 80 after the change are stored in linkage with the conveyance instructions before the change. For example, the conveyance instruction 78 indicates that the conveyance of an article from a load port A to a load port B (the conveyed article is specified by an ID) has been changed from a carriage 1 to a carriage 2. For the conveyance instruction 80, since an article has not been conveyed from a buffer shelf to a load port, this is described as a conveyance instruction. The conveyance instruction 80 indicates the ID of the article and the carriage (carriage 1) to which this conveyance instruction is assigned.

Referring back to Figure 1, operations according to the embodiment will be described on the assumption that two conveyance instructions will be executed; the instructions request that an article be conveyed from the load port 20a to the processing device 16 and that an article be conveyed from the stocker 14 to the load port 20a, respectively. Further, it is assumed that the conveyance of the article from the load port 20a to an appropriate processing device or stocker is assigned to the overhead running carriage 12a and that the conveyance of the article from the stocker 14 to the load port 20 is assigned to the overhead running carriage 12b.

In the prior art, the overhead running carriage 12a is first instructed to convey the article from the load port 20a in order to prevent the following situation: the overhead running carriage 12b cannot unload its article onto the load port 20a and thus waits for the load port 20a to become empty by circulating through the intra-bay route 6. The controller does not instruct the overhead running carriage 12b to convey the article from the stocker 14 to the load port 20a until the overhead running carriage 12a reports to the controller that the article originally present at the load port 20a has been loaded onto the overhead running carriage 12a. Such conveyance control is clearly inefficient.

In contrast, according to the embodiment, the controller instructs the overhead running carriage 12b to convey the article from the stocker 14 to the load port 20a without waiting for the report indicating that the article originally present at the load port 20a has been completely carried out of the load port 20a.

In an extreme case, the overhead running carriage 12a and the overhead running carriage 12b may be simultaneously instructed to convey articles. This allows the carriage controller to easily assign conveyance instructions to the overhead running carriages.

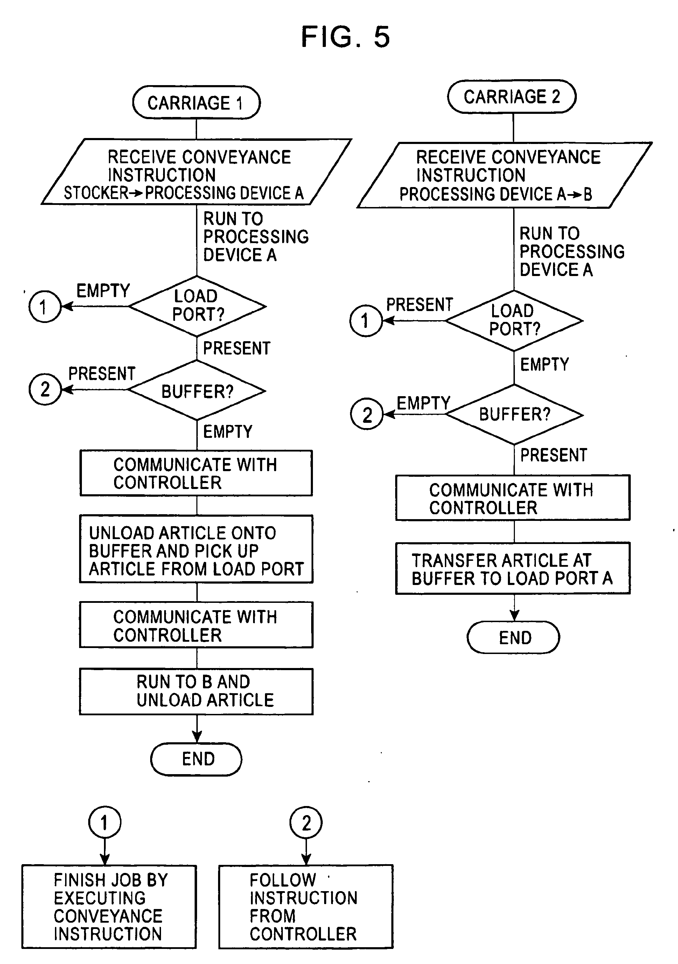

Figure 5 shows a process executed if a first carriage (carriage 1) is instructed to convey the article from the stocker 14 to a processing device A and if the next carriage (carriage 2) is then instructed to convey the article from the processing device A to a processing device B. The carriage 1 runs to the processing device A to check whether or not an article is present at the load port.

If no article is present at the load port, the article originally present at the load port has already been loaded on the carriage 2. Thus, the carriage 1 can complete the conveyance instruction by unloading its article onto the load port.

If an article is present at the load port, the carriage 1 checks whether or not an article is present on the buffer. If an article is also present on the buffer, the carriage 1 communicates with the controller to report this to the controller.

Then, in accordance with an instruction from the controller, the carriage 1, for example, temporarily places its article on another nearest buffer or waits by circulating through the intra-bay route. If an article is present at the load port, while no article is present at the buffer, the carriage 1 communicates with the controller to report this to the controller. Then, in accordance with an instruction from the controller, the carriage 1 unloads its article onto the buffer and then picks up the article from the load port. The carriage 1 then notifies the carriage controller that the carriage 1 has unloaded its article onto the buffer as well as of the ID of an instruction on conveyance to the processing device A or the ID of the article specified in the conveyance instruction. The carriage 1 also receives, from the carriage controller, a conveyance instruction indicating the destination of the article picked up from the load port, the ID of the article, and the like. The job shown in Figure 5 is finished when the carriage 1 runs to the specified destination B and then unloads its article.

The carriage 2 runs to the processing device A. If an article is present at the load port, the carriage 2 picks up and conveys this article to the processing device B. If no article is present at the load port, the carriage 2 checks whether or not an article is present at the buffer. If no article is present at the buffer either, the carriage 2 follows an instruction from the controller. If an article is present at the buffer, the carriage 2 receives the destination of that article, the ID of the article, and the like from the controller. In many cases, the destination is the load port facing the buffer. Thus, the job in Figure 5 is completed when the article already present at the buffer is transferred to the load port of the processing device A. Every time the carriage executes the appropriate process, it notifies the controller of the result of the execution.

As described above, the carriage 1 executes an instruction on conveyance of an article to the processing device A by changing it to an instruction on conveyance of the article to the buffer. Then, the carriage 2 considers that the instruction on conveyance of the article from the processing device A to the processing device B has been cancelled and instead conveys the article from the buffer to the load port of the processing device A. In this manner, it is possible to efficiently carry articles out of and into the same port without the consciousness of the order in which the carriages 1, 2 arrive.

In the present embodiment, when the carriage 2 reaches the processing device A and reports to the controller that the no article is present at the load port, whereas an article is present at the buffer, the controller reassigns, to the carriage 2, the instruction requesting that the article already present at the buffer be conveyed to the load port of the processing device A. However, on the basis of the report from the carriage 1, the controller has already confirmed that the carriage 1 unloaded its article onto the buffer and then picked up and carried the article out of the load port before the carriage 2 reached the load port.

Accordingly, the controller may reassign the conveyance instruction without the need to wait for an inquiry from the carriage 2. For example, efficient communications may be carried out when after receiving a report from the carriage 1, the controller communicates with the carriage 2 to cancel the original conveyance instruction already assigned to the carriage 2, while assigning, to the carriage 2, a conveyance instruction requesting that the article already present at the buffer be conveyed to the load port of the processing device.

If a plurality of buffer shelves are present near one load port, the carriage 1 shown in Figure 5 temporarily places an article on a first shelf located near the load port. The carriage 1 then temporarily places, on a second shelf, the article already present at the load port. Then, the article already present at the first shelf may be unloaded onto the load port to complete the conveyance of the article from the buffer to the load port. Then the article is carried out of the second shelf to complete the jobs of the carriages 1, 2, shown in Figure 5. Consequently, at this point, another conveyance instruction can be assigned to the carriage 2.

Referring back to Figure 2, the buffer shelf is placed at almost the same position in the running direction of the running rail 28 as that at which the load port 20 is placed. In other words, the buffer shelf 22 is provided at the position where the overhead running carriage 12 can transfer the article without the need for running; the overhead running carriage 12 is stopped at a stop position from which an article is transferred to the load port 20. Thus, at the same stop position, the overhead running carriage 12 can transfer articles to and from both the buffer shelf 22 and the load port 20. Therefore, the stoppage of the overhead running carriage 12 at the buffer shelf 22 can be controlled using data on the control of stoppage at the load port 20 as it is. The overhead running carriage 12 can use the lateral moving section 34 to transfer, at the same position, articles to and from both the load port and the buffer shelf 22. Consequently, articles can be easily transferred. Further, the overhead running carriage 12 comprises the lateral moving section 34. Consequently, there is no need to be provided with any facilities such as a conveyor at the buffer shelf 22 side.

## Claims

1. A carrying system (2) comprising a carriage (12a,12b) that runs on a route (6) along processing devices (16,18) with load ports (20) to convey article; a carriage controller (62) that indicates a destination of an article to the carriage (12a,12b), and a buffer shelf (22,23) is provided near each of the load ports (20) the carrying system being arranged so that when the carriage which has been instructed to carry an article into a predetermined load port (20) reaches the load port, if another article has already been present at the load port (20), the carriage unloads the carried-into article onto the buffer shelf (22), the carrying system being **characterized in that** is further arranged so that the carriage then carries the other article out of the load port.

2. A carrying system according to Claim 1, **characterized in that** the carriage is a first carriage (12a), and when a second carriage (12b) which has been instructed by the carriage controller (62) to carry the article out of the load port (20) reaches the load port later than the first carriage, the second carriage (12b) carries the article unloaded onto the buffer shelf by the first carriage (12a), into the load port.

3. A carrying system according to Claim 1, **characterized in that** the load port (20) and the buffer shelf (22,23) are at the same position along a running direction of the carriage so that the carriage (12a,12b) can be stopped at a position where the carriage can transfer the article either to the load port or to the buffer shelf.

4. A carrying system according to Claim 1, **characterized in that** the buffer shelf (22,23) is provided on either a right or left side of the route (6), and the carriage (12a,12b) is provided with a transfer device that can transfer the article in a vertical direction and means for moving the transfer device rightward or leftward in the running direction.

## Patentansprüche

1. Transportsystem (2), bestehend aus einem Fahrzeug (12a, 12b), das auf einer Route (6) längs Bearbeitungsgeräten (16, 18) mit Ladeöffnungen (20) zum Transport von Gegenständen fährt, einem Fahrzeugsteuergerät (62), das dem Fahrzeug (12a, 12b) den Bestimmungsort eines Gegenstands anzeigt, und einem Speicherregal (22, 23), das nahe jeder der Ladeöffnungen (20) angeordnet ist,
wobei das Transportsystem so ausgebildet ist, dass, wenn das Fahrzeug, das angewiesen wurde, einen Gegenstand in eine bestimmte Ladeöffnung (20) zu transportieren, die Ladeöffnung erreicht, und wenn ein anderer Gegenstand bereits an der Ladeöffnung (20) vorhanden ist, das Fahrzeug den mitgeführten Gegenstand auf das Speicherregal ablädt, wobei das Transportsystem **dadurch gekennzeichnet ist, dass** es weiterhin so ausgebildet ist, dass das Fahrzeug dann den anderen Gegenstand aus der Ladeöffnung transportiert.

2. Transportsystem nach Anspruch 1,
**dadurch gekennzeichnet, dass** das Fahrzeug ein erstes Fahrzeug (12a) ist, und wenn ein zweites Fahrzeug (12b), das vom Fahrzeugsteuergerät (62) angewiesen wurde, den Gegenstand aus der Ladeöffnung (20) zu transportieren, die Ladeöffnung später als das erste Fahrzeug erreicht, das zweite Fahrzeug (12b) den auf das Speicherregal vom ersten Fahrzeug (12a) abgeladenen Gegenstand in die Ladeöffnung transportiert.

3. Transportsystem nach Anspruch 1,
**dadurch gekennzeichnet, dass** die Ladeöffnung (20) und das Speicherregal (22, 23) in Laufrichtung des Fahrzeugs an der gleichen Position sind, so dass das Fahrzeug (12a, 12b) an einer Position angehalten werden kann, an der das Fahrzeug den Gegenstand entweder zur Ladeöffnung oder zum Speicherregal übertragen kann.

4. Transportsystem nach Anspruch 1,
**dadurch gekennzeichnet, dass** das Speicherregal (22, 23) entweder auf der rechten oder auf der linken Seite der Route (6) angeordnet ist und das Fahrzeug (12a, 12b) mit einer Transfervorrichtung versehen ist, die den Gegenstand in vertikaler Richtung übertragen kann, und einer Einrichtung, um die Transfervorrichtung rechts oder links in Laufrichtung zu verstellen.

## Revendications

1. Système de portage (2) comprenant un chariot (12a, 12b) il se déplace sur une route (6) le long de dispositifs de traitement (16, 18) avec des ports de chargement (20) pour transporter des articles; un dispositif de commande de chariot (62) qui indique une destination d'un article au chariot (12a, 12b); et une étagère de mise en attente (22, 23) est prévue à proximité de chacun des ports de chargement (20), le système de portage étant arrangé de telle sorte que, quand le chariot - qui a reçu l'ordre de transporter un article à l'intérieur d'un port de chargement prédéterminé (20) - parvient au port de chargement, si un autre article est déjà présent au niveau du port de chargement (20), le chariot décharge l'article qu'il transporte sur l'étagère de mise en attente (22), le système de portage étant **caractérisé en ce qu'**il est arrangé par ailleurs de façon à ce que le chariot transporte alors l'autre article hors du port de chargement.

2. Système de portage selon la revendication 1, **caractérisé en ce que** le chariot est un premier chariot (12a) et que, quand un deuxième chariot (12b) - qui a reçu l'ordre du dispositif de commande du chariot (62) de transporter l'article hors du port de chargement (20) - parvient au port de chargement plus tard que le premier chariot, le deuxième chariot (12b) transporte l'article déchargé sur l'étagère de mise en attente par le premier chariot (12a) à l'intérieur du port de chargement.

3. Système de portage selon la revendication 1, **caractérisé en ce que** le port de chargement (20) et l'étagère de mise en attente (22, 23) se trouvent à la même position dans le sens d'une direction de déplacement du chariot, de sorte que le chariot (12a, 12b) peut être arrêté à une position au niveau de laquelle le chariot peut transférer l'article, soit à l'intérieur du port de chargement, soit sur l'étagère de mise en attente.

4. Système de portage selon la revendication 1, **caractérisé en ce que** l'étagère de mise en attente (22, 23) est prévue, soit sur un côté droit, soit sur un côté gauche, de la route (6), et que le chariot (12a, 12b) est pourvu d'un dispositif de transfert qui peut transférer l'article dans une direction verticale ainsi que de moyens adaptés pour déplacer le dispositif de transfert vers la droite ou vers la gauche dans le sens de la direction de déplacement.
